# EUROPEAN PATENT SPECIFICATION

(11) **EP 1 635 644 B1**
(45) Date of publication and mention of the grant of the patent: **17.01.2007**
(21) Application number: 04752775.9
(22) Date of filing: 18.05.2004
(51) Int. Cl.: A21D 10/02, B65D 85/36, B65B 25/00

(54) **PACKAGED DOUGH PRODUCT IN FLEXIBLE PACKAGE, AND RELATED METHODS**
VERPACKTES TEIGPRODUKT IN FLEXIBLER VERPACKUNG UND VERWANDTE VERFAHREN
PRODUIT A PATE EMBALLE DANS UN EMBALLAGE FLEXIBLE ET PROCEDES CORRESPONDANTS

(30) Priority: 28.05.2003 US 446481
(43) Date of publication of application: 22.03.2006
(73) Proprietor: GENERAL MILLS MARKETING, INC., Minneapolis, MN 55440 (US)
(72) Inventor: GENG, Qinghuang, Roseville, MN 55113 (US); DOMINGUES, David, J., Plymouth, MN 55441 (US)
(74) Representative: Vossius & Partner
(86) International application number: PCT/US2004/015821
(87) International publication number: WO 2004/105496

(56) References cited:
- EP-A- 1 142 791
- WO-A-96/39041
- WO-A-98/51159
- WO-A-20/04034793
- WO-A-20/04052104
- US-A- 3 338 722
- US-B1- 6 602 529

## Description

The invention relates to dough compositions in flexible packaging. According to various embodiments, the dough composition may be refrigerated or frozen, proofed or unproofed. The invention also includes related methods of packaging and processing that allow proofing of a dough composition inside of a flexible package.

A wide variety of leavenable dough products allow a user to "home bake" a dough to produce a desirable hot, fresh-baked item. Many such items are proofed prior to baking, and for consumer convenience may sometimes be proofed prior to purchase. Such products, sold after proofing, are examples of products referred to as "pre-proofed." Examples of pre-proofed dough products include breads and bread-like products that generally contain a leavening ingredient and include but are not limited to loaves of bread such as French bread, white or whole wheat bread, bread sticks, biscuits, rolls, pizza dough, and the like.

One technique for preparing a pre-proofed dough product is by use of a , package having a fixed volume and allowing a contained dough composition to ' proof and expand to build pressure inside of the fixed volume packaging. Such products are generally chemically-leavenable. For example, one way to accommodate proofing of a dough composition during refrigerated storage is to store a refrigerated dough composition in a canister of a fixed volume so the refrigerated dough product proofs while in the canister. With expansion of the dough composition, the dough volume increases to fill the entire fixed volume, and upon any further proofing the pressure inside the canister will increase. The canister is usually formed from composite paper board spirally wound into a cylinder. The initial volume of dough packed into the canister is usually less than the canister volume, and as the dough proofs and expands the pressure increases to force the dough against canister end caps to seal gas passages around the end caps of the canister.

Another form of packaging for food products, including those that may be refrigerated or frozen, is flexible packaging such as packages known in the food industry as "chubs," or packages known as "pouches." A pouch is generally a non-pressurized flexible package prepared from a sealed flexible film. A chub usually includes a cylindrical or tubular package of thin flexible material formed to contain a quantity of food item. Tubular package ends may be closed by any appropriate mechanical fastener such as crimped clips. International Publication Number WO 02/28746, for example, discusses dough products packaged in chubs. Packaging of proofed refrigerated dough in flexible film containers, as well as other types of containers, often includes the use of a valve to vent carbon dioxide gas from the package headspace. These valves are prone to fouling and can be expensive.

The packaging of expansible dough products is also addressed in e.g., EP 1 142 791 and WO 98 51 159.

There is continuing need for new types of packaged pre-proofed dough products that may be refrigerator stable or freezer stable. Similarly, there is continuing need for new methods of packaging and preparing such packaged dough products. Preferred packages can be economical and simple, such as flexible film packaging with no pressure release valve.

The invention relates to dough products such as unproofed or proofed (e.g., partially proofed or pre-proofed) packaged dough products, as well as methods of packaging and proofing the same.

The invention provides for packaging and proofing a dough composition in a flexible package without the need for a substantial amount of headspace in the package interior volume, and preferably without the need for the flexible packaging material to substantially stretch to accommodate an increased volume of a proofed dough composition. Instead, the dough composition can be placed in a flexible unvented package that can accommodate the volume that the dough composition will achieve upon proofing, preferably without stretching the packaging material or resulting in a high internal pressure. In some embodiments, headspace can be removed and vacuum may be applied to create a negative internal pressure. The flexible package accommodates the volume of the unproofed dough composition, preferably without substantial headspace, and can also be of a volume to accommodate the proofed dough product because the package can be designed to change its form to accommodate the larger volume, preferably without substantial stretching and (if desired) without creating a high internal pressure. The change in form may occur by the flexible package changing from a folded or wrinkled package to an unfolded or unwrinkled form. Alternatively or additionally, the change in form may occur by the flexible package changing from one shape to another, e.g., from a shape that has a low ratio of volume to surface area to a shape that has a higher ratio of volume to surface area.

According to an embodiment of the invention, proofing of a dough composition can be accomplished inside of an oversized flexible package by designing a packaged unproofed dough product to include a flexible packaging material that can change from a folded or wrinkled form to an unfolded or unwrinkled form upon proofing of the contained dough composition. E.g., unproofed dough composition can be placed into an oversized package and headspace can be removed from the package. The package may be a chub, a pouch, or another flexible package. Upon removal of headspace, the flexible packaging material conforms to the shape and volume of the contained unproofed dough composition, e.g., by forming folds or wrinkles, because the full (unfolded and unwrinkled) volume of the package is greater than the volume of the unproofed dough composition. Removal of headspace can be done mechanically or by vacuum, optionally creating a reduced internal package pressure, in either case causing the oversized flexible package to conform to the unproofed dough composition with a reduced or minimal headspace. Upon proofing, the dough composition expands within the folded or wrinkled packaging material and fills the packaging material to its fully sized volume, preferably still with minimal headspace, and optionally without stretching the packaging material or producing a pressurized interior.

In another embodiment, unproofed dough composition can be placed into a flexible package and the packaged unproofed dough composition can be formed into a shape that exhibits an inefficient ratio of volume to surface area. Optionally and preferably, headspace can be reduced, minimized, or eliminated. Also optionally, the package can be placed at reduced pressure (e.g., by use of vacuum) to cause the packaging to conform to the shape of the unproofed dough composition. Upon proofing, the dough composition expands within the package by changing shape from the shape having a less efficient ratio of volume to surface area to a shape with a more efficient ratio of volume to surface area. The proofed dough composition can preferably be packaged with minimal headspace.

The package can be of flexible packaging material made of materials that include at least one flexible material impermeable to gases such as oxygen, carbon dioxide, water vapor, etc. Flexible refers to the ability of a packaging material to bend, fold, wrinkle, and change shape as described herein, and does not require the material to stretch. The dough composition can be any type of leavenable dough composition, e.g., a proofed or unproofed dough composition, stable at a refrigeration or frozen storage temperature. The dough composition can be leavenable by action of yeast or chemical leavening agents. Examples of useful types of dough compositions include chemically-leavenable biscuits, breads and bread-like dough compositions including French bread, bread rolls, pizza crust.

Certain embodiments of the invention include a dough composition packaged in a low pressure flexible package, optionally and preferably with little or no headspace. A low pressure package can mean a package that is substantially air tight, with an internal pressure that is typically less than 15 psig (pounds per square inch, gauge) (gauge pressure is absolute pressure minus atmospheric pressure, i.e., psig is psi absolute minus approximately 1 atmosphere or 14.7 psi; for example a gauge pressure of 0 psig inside a package is a pressure of approximately 1 atmosphere). Examples of low pressure packages include chubs and pouches that do not exhibit a highly pressurized interior. Low pressure packages-specifically exclude pressurized cans and canisters, e.g., of cardboard, that contain dough products at an internal pressure of at least 15 psig.

Package configurations of the invention do not require and exclude a pressure relief valve or vent, because according to the invention the flexible package can change form to accommodate expansion of a contained dough product (e.g., by allowing a dough composition to fill evacuated oversized volume of a package, by changing shape to improve volume to surface area efficiently, or both) which means that there may be no need for expulsion of gases through a vent or release valve. Furthermore, preferred embodiments of the invention can include placing an unproofed dough composition into a flexible package with minimal headspace, which again eliminates the need for a relief valve. Certain preferred embodiments of the invention can include the use of a flexible packaging material that contains carbon dioxide scavenger to also reduce pressure at the interior of the flexible package, if carbon dioxide gas evolves from the dough composition.

Optionally and preferably, an unproofed or proofed packaged dough product can include limited headspace in the package, preferably very little or no headspace. Headspace refers to the amount of volume of the packaged dough product not taken up by dough composition; i.e., the internal volume as packaged not including the dough product. (Headspace does not include space not used but available in the form of wrinkled or folded packaging material.) The headspace of a packaged unproofed or proofed dough composition can preferably be less than about 10 percent of the total internal volume of the packaged product, more preferably less than 5 percent, and even more preferably less than 3 percent or 1 percent of the total internal package volume.

The invention allows proofing a dough composition inside of a flexible package. This advantageously reduces steps of handling the dough composition that would otherwise be required if the dough composition is first proofed and then placed into a package. Additionally, proofing after packaging may reduce or eliminate potential contamination of a dough product.

As used in the present description, "proof" and "proofing" relate to a step before baking of a dough composition that allows at least partial expansion (i.e., at least partial proofing) of a dough composition by giving time to allow chemical leavening agents to produce leavening gas (or yeast to metabolize and produce gaseous metabolites) that expand bubbles within the dough composition and thereby expand the dough composition to a desired volume and optionally to a desired shape.

"Pre-proofed" means that a dough product does not require a proofing step after removal from refrigerated or frozen storage, prior to cooking, e.g., baking.

The term "unproofed" is used as generally understood in the dough and baking arts, e.g., to refer to a dough composition that has not been processed to include timing intended to cause or allow proofing or intentional leavening of a dough composition. For example, a dough composition may not have been subjected to a specific holding stage for causing the volume of the dough to increase by 10% or more.

In one aspect the invention relates to a packaged dough product comprising proofed dough composition in an unvented package comprising flexible film. The package contains less than 10% headspace and has an internal pressure of -5 psig to 5 psig.

In another aspect the invention relates to a packaged dough product containing an unproofed dough composition in a flexible invented package. The package comprises flexible film. The package contains the unproofed dough composition and less than 10% headspace. And the package is sized to allow the dough composition to increase to at least 1.5 times its original volume without substantially stretching the flexible film.

In another aspect the invention relates to a method of preparing a packaged dough product. The method comprises providing an unproofed dough composition, placing the unproofed dough composition into a flexible unvented package sized to fit the dough composition without substantially stretching upon proofing of the dough composition, forming the flexible package containing the unproofed dough composition to contain less than 10 percent headspace, and allowing the dough composition to proof inside the package.

Figures 1a and 1b illustrate a side cross-section view and a top view of an embodiment of the invention in the form of packaged unproofed dough portions contained in a pouch.

Figures 2a and 2b illustrate embodiments of a packaged dough composition of the invention in the form of a flexible chub that contains dough composition.

Figures 3a through 3j illustrate cross sectional views of embodiments of the invention in the form of unproofed dough compositions contained in flexible packages having inefficient ratios of internal volume to surface area.

According to the invention, an unproofed dough composition can be placed in a flexible package, optionally and preferably with reduced or limited headspace, and the unproofed dough composition can be proofed while inside the package.

The flexible package can be oversized relative to the unproofed dough composition, meaning that the flexible package is of sufficient size (volume) when fully sized (without being wrinkled, folded or stretched) to contain the unproofed dough composition with a substantial amount of volume left over. For example, the fully sized volume of the flexible package may be from about 1.5 to about 2 times the volume of the unproofed dough composition. This can make the fully sized volume of the flexible package approximately equal to the volume of the proofed dough composition, e.g., the volume that the dough composition will achieve after a desired amount of proofing. For example, the fully sized volume may be from 0.7 to 1.3 times the volume of the proofed dough composition, preferably 0.9 to 1.1 times the proofed volume. Matching the fully sized volume of the package to the approximate volume of the proofed dough compositions can allow the proofed dough composition to fit well in the package preferably with limited headspace and without a pressurized interior.

The proofed volume of an unproofed dough composition can be calculated ahead of time so the fully sized volume of the package can accommodate the proofed volume. The fully sized volume of the flexible package can be approximately equal to the volume of the proofed dough composition, with limited headspace or essentially no headspace, and with the internal pressure of the packaged dough product containing the proofed dough composition being relatively low, i.e., -5 psig to 5 psig. This can preferably occur without substantial stretching of the flexible packaging material, e.g., with less than 10% stretching of the flexible package in any one direction, preferably with less than 5% or less than 2% stretching in any one direction.

Thus, preferred embodiments of the invention allow placing unproofed dough composition in a flexible package, preferably with reduced or limited headspace, and proofing the dough composition while in the package to produce a packaged proofed dough product also containing limited headspace and low internal pressure. During proofing and expansion of the dough composition inside the flexible package, the volume of the packaged dough product, and therefore the volume internal to the flexible package, can increase to accommodate the expanding dough composition by a change in form or shape of the packaging material, without substantial stretching. A pressure relief valve also is not required.

The package containing the unproofed dough composition is flexible but not necessarily stretchable, and can optionally contain folds or wrinkles or otherwise be of a form, e.g., geometry or shape, or combination of these, to allow an increase in internal volume of the flexible package without substantial stretching.

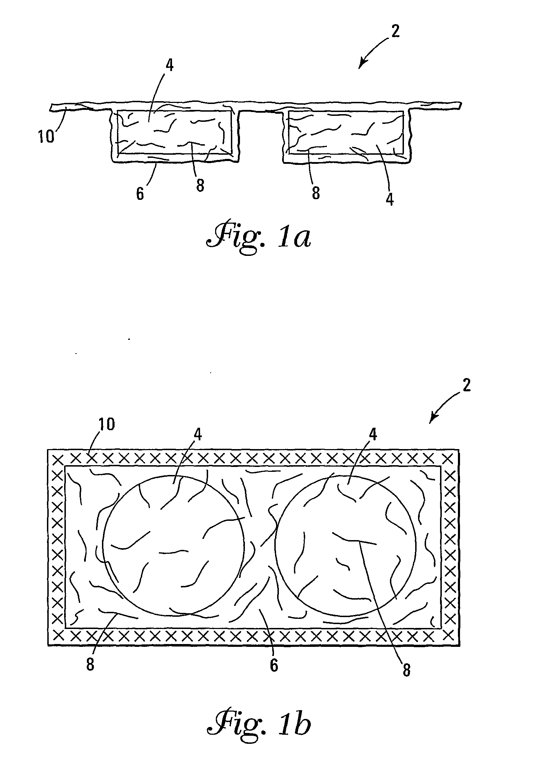

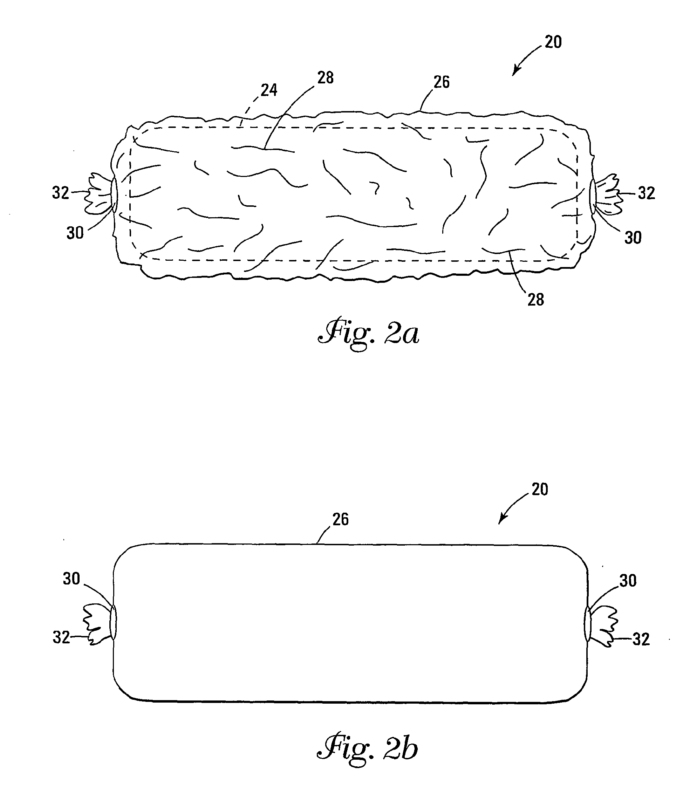

According to one general mode of providing an unproofed dough composition in a package for proofing, a packaging material can conform to an unproofed dough composition by wrinkling, folding, or otherwise collapsing against and conforming to the volume of the contained unproofed dough composition. See, e.g., figures 1a, 1b, 2a. According to this embodiment of the invention a dough composition can be placed into an oversized flexible package and the flexible package can be collapsed upon or conformed to the dough composition to eliminate headspace. Headspace can be removed mechanically or with vacuum. (The dough composition can preferably be frozen if vacuum is used to reduce headspace, because the frozen dough composition is less susceptible to damage.) The package can then be sealed. Optionally and preferably, headspace can be removed using vacuum to produce a negative pressure inside the package, which can then be sealed. A negative pressure can be particularly desirable if the amount of dough expansion during proofing will be greater than the excess volume of the package. A negative pressure is a pressure below atmospheric pressure, e.g., less than 1 atmosphere (0 psig). A preferred negative internal pressure can be a negative pressure that will allow any desired amount of dough expansion as a result of carbon dioxide formation, e.g., from about -5 psig to about 0 psig. Optionally, a carbon dioxide scavenger can be included in the packaged dough product to remove an amount of carbon dioxide and limit the headspace produced during proofing, if carbon dioxide evolves from the dough composition during proofing.

In certain preferred embodiments, a refrigerator stable packaged dough product can be prepared with removal of headspace from a package that contains a frozen chemically-leavenable dough composition. The package collapses about the frozen dough composition and conforms to the shape of the dough composition. The amount of carbon dioxide that will become present inside the package, potentially producing a gas-containing headspace, can be minimized or controlled by one or more of the use of a relatively insoluble acidic chemical leavening agent (e.g., SALP), an encapsulated basic chemical leavening agent, and a carbon dioxide scavenger, (see *infra).* Whatever small amount of expansion that may occur within the package during refrigerated storage can be limited to a minor amount of expansion of the dough composition itself, as opposed to the creation of a carbon dioxide gas-containing headspace.

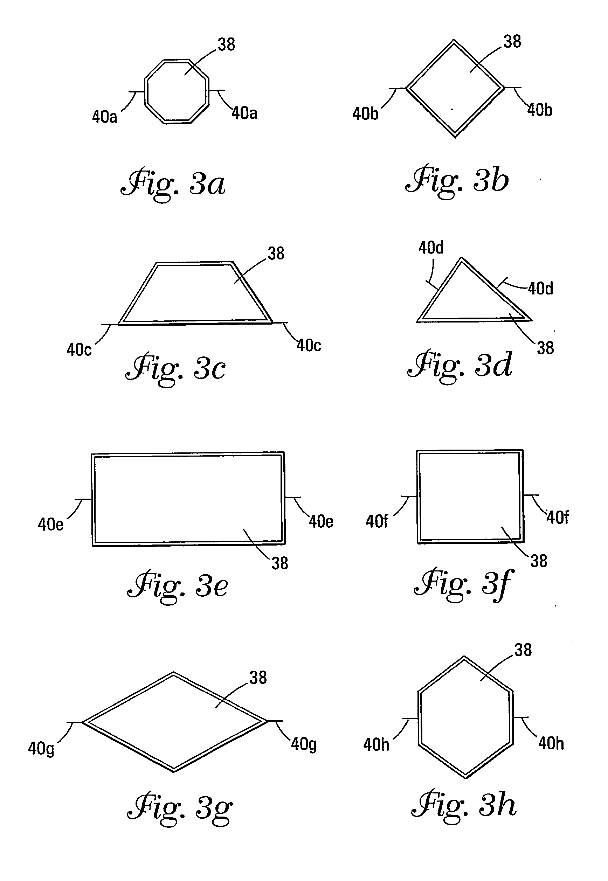

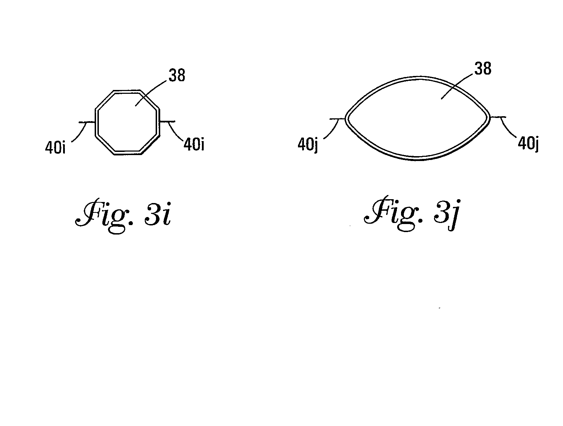

By another general mode of providing an unproofed dough composition in a package for proofing, a shape of a package may provide an inefficient ratio of internal volume to external surface area, again preferably without headspace, and with or without wrinkling or folding of the flexible package to conform to the unproofed contained dough composition. See, e.g., figures 3a-3j. Accordingly, a shape of a packaged unproofed dough product can by design to be not efficient in terms of the ratio of package volume to package surface area. Upon proofing, the dough expands and the shape of the dough composition and the flexible package can change into a shape that is more efficient in terms of the ratio of package volume to surface area. The volume inside of the package can increase with proofing of the dough composition, yet the total surface area of the package can remain substantially unchanged. This allows for the package to accommodate the volume of the proofed dough composition without requiring the flexible packaging material to stretch and without the need for headspace, pressure build, or a relief valve.

According to methods of the invention, dough composition can be placed in a flexible package. The dough composition can be any leavenable unproofed or less than fully proofed dough composition. The unproofed dough composition can be frozen or thawed, but is preferably frozen to prevent damage during this packaging. Preferably the package contains limited or reduced headspace. The flexible package can be but does not have to be wrinkled or folded to conform to the size and shape of the unproofed dough composition. Additionally or instead of wrinkling or folding to remove headspace, the unproofed dough composition and flexible package can be formed into a shape that exhibits an inefficient ratio of volume to surface area.

The dough composition can be proofed or partially proofed while inside the package. Proofing generally occurs by placing the packaged unproofed dough composition at conditions that allow leavening agent to produce a leavening gas that forms or expands bubbles within the dough, to leaven the dough. The gas and bubbles further leaven and expand the dough during baking. According to specific embodiments of the invention, a dough composition can preferably be formulated to cause the dough composition to expand during proofing and not to evolve leavening gas (e.g., carbon dioxide) from the dough composition into the sealed flexible package. This can prevent gas buildup during proofing between the dough composition and the package, i.e., prevent gas from filling the package and creating a gas-containing headspace.

Chemically-leavenable dough compositions can be preferred in the practice of the invention because it is generally possible to calculate and control the amount of carbon dioxide produced during proofing (e.g., by selection of the type and amount of chemical leavening agents). The ability to calculate and control the amount and timing of leavening gas produced during proofing allows the invention to be practiced to prevent the production of headspace during proofing. Packaged proofed dough compositions of the invention can preferably have limited headspace, because headspace can cause a dough product to take on a bulged or bloated look that may deter consumers from purchasing or using the product.

For chemically-leavenable dough compositions, proofing occurs by reaction of leavening agents to produce a leavening gas. Typically, basic chemical leavening agent reacts with acidic leavening agent to produce leavening gas, generally carbon dioxide. Proofing can be accomplished with proper conditions of time and temperature, as is well understood in the baking arts. As an exemplary embodiment of the invention, proofing a chemically leavenable dough composition can occur at a refrigerated storage temperature, e.g., from 35 to 45 F. If an unproofed chemically-leavenable dough composition is placed in a flexible package while the dough composition is frozen, the packaged unproofed dough composition can be placed in refrigerated storage where it can thaw and proof. The dough composition can thaw over a period of time in the range of hours, e.g., less than 24 hours, and depending on the leavening system may proof over a period of days, e.g., within 7 days.

Yeast-leavenable dough compositions can also be used according to the invention, but may not be preferred because depending on the type of yeast used, proofing or carbon dioxide production by the dough composition cannot always be stopped upon a calculated amount of carbon dioxide production. With yeast leavening, the dough composition expands in volume during proofing, i.e., the dough composition becomes less dense, due to fermentation of sugars by the yeast to produce gaseous carbon dioxide. If a yeast-leavenable dough composition is used, use of a substrate-limited strain of yeast can be preferred.

Proofing for yeast-leavenable dough compositions can be done at known conditions and if desired, optionally with the use of specialized proofing equipment known in the baking arts.

The dough composition can be proofed until the proper degree of proofing is obtained, which can be measured by the volumetric expansion of the dough. Generally, this volumetric increase can be in a range to achieve a proofed raw specific volume of about 1.5 to about 3, preferably between about 1.5 to about 2.75, and most preferably from between about 1.75 and about 2.5, which can preferably be a specific volume that is at least about 1.5, preferably at least about 2 times the specific volume of the unproofed dough composition.

Preferably, the packaged proofed dough product can include a relatively low amount of headspace, e.g., less than 10 percent, more preferably less than 5 percent or less than 3 percent or 1 percent headspace.

Also, the packaged proofed dough product has a low internal pressure, i.e., from -5 psig to 5 psig. The invention can be used to produce packaged dough products that include a higher or lower internal pressure, so long as the package material and seal strength are sufficient. Preferred embodiments of the invention include a proofed dough composition packaged in a low pressure package, optionally and preferably with limited or no headspace. Examples of low pressure packages include chubs and pouches that have a low internal pressure. Relatively low pressure packages and low pressure packages specifically exclude pressurized cans and canisters, e.g., of cardboard, that contain dough products at an internal pressure greater than about 15 psig.

The material of the flexible package can be any of a variety of flexible materials, generally films, useful in packaging food or dough products. The flexible packaging material can be made of materials that include at least one material impermeable to gases such as oxygen, carbon dioxide, water vapor, or combinations of these. Flexible refers to the ability of a packaging material to bend and change shape as described herein, and does not require the material to stretch. Although the packaging material may be stretchable if desired, stretchability is not required and may not be preferred.

Exemplary flexible packaging materials include flexible films or film-like materials such as polymeric films or flexible paper or foil materials. The flexible packaging does not need to include stiff cardboard, cardboard cans, or other non-flexible materials.

Preferred flexible film materials can be continuous single or multi-layer films that are flexible and impermeable to gases such as oxygen, carbon dioxide, water vapor, or combinations of these. A substantially air tight flexible packaging can be prepared from materials such as paper or polymeric materials or foils, with especially preferred materials including multi-layer polymeric (e.g., plastic) films. For example, a flexible packaging film may include multiple layers including a sealant layer, a scavenger layer, and an oxygen barrier layer.

A preferred multi-layer polymeric film may include a sealant layer and a carbon dioxide scavenger. A sealant layer can be placed at a surface of the flexible packaging material so it is located at the interior of the flexible package. The interior sealant layer can contact the dough composition on one side, and is adjacent to a scavenger layer on the other side. The sealant layer can be at least partially permeable to carbon dioxide so that carbon dioxide is able to pass through the sealant layer and reach the scavenger layer. The sealant layer can maintain the taste or other properties of a food product contained in the packaging material by keeping scavenger (from the scavenger layer) away from direct contact with the contained food. Yet the sealant layer still is sufficiently permeable to carbon dioxide to allow carbon dioxide to reach the scavenger layer where the carbon dioxide can be absorbed. Another function of a sealant layer can be to provide an air tight and durable seal by heating. The sealant layer therefore can preferably be a layer that can be heat processed to produce such a seal. Examples of materials that can be at least partially permeable to carbon dioxide and also can be used to produce an air tight and durable seal include thermoplastic polymer materials such low temperature melt point polymers, e.g., polyolefins such as LLDPE (linear low density polyethylene), LDPE (low density polyethylene), or copolymers of either of these with other polymers, e.g., copolymers of LLDPE or LDPE with EVA (ethylene vinyl acetate).

A scavenger layer can include carbon dioxide scavenger (or simply "scavenger"). The scavenger may be a separate layer by itself or may be contained in one of the other layers of the multi-layer film. A scavenger material can preferably be included as a filler or a suspended material in a polymeric matrix that is a layer of a multi-layer packaging material. As an example, scavenger can be present as filler in a polymeric matrix of a packaging film. See, for example, United States Patent number 6,451,423, which describes flexible films that contain carbon dioxide scavenger materials. See also Applicants' copending United States patent application serial number 10/273,668, filed 10/16/2002 "Dough Composition Packaged in Flexible Packaging with Carbon Dioxide Scavenger," the entire disclosure of which is incorporate herein by reference. The polymer can be a polymer that is useful to produce a layer containing the polymer and suspended scavenger, and that is sufficiently permeable to carbon dioxide to allow carbon dioxide to pass into the polymeric material to contact the scavenger material contained therein. Examples can include polyolefins such as LLDPE, LDPE, and copolymers of either of these with other polymers, e.g., copolymers of LLDPE or LDPE with EVA.

Useful scavengers can include metal oxides and metal hydroxides. A metal oxide can react with water to produce a metal hydroxide. The metal hydroxide can react with carbon dioxide to form water and a metal carbonate. Some specific examples of metal oxides and metal hydroxides include calcium oxide, magnesium oxide, barium oxide, potassium oxide, sodium oxide, and their hydroxides.

Other useful materials, e.g., polymeric or fibrous materials, can also be included in different layers of a multi-layer a flexible packaging material, including different polyesters (e.g., PET), nylons, polyolefins (e.g., polyethylene), vinyls, polyalcohols, etc., optionally in combination with other materials such as foils or fibrous layers, which may further be treated.

Packages of the invention do not require and advantageously exclude a pressure relief valve, because according to the invention the flexible package can accommodate expansion of a contained dough product by changing form, which means that there is no need for expulsion of gases. Furthermore, embodiments of the invention include placing an unproofed dough composition into a flexible package with limited or substantially no headspace, which eliminates the need for a pressure relief valve. And, according to certain preferred embodiments of the invention, a flexible packaging material may contain carbon dioxide scavenger to reduce pressure from carbon dioxide produced at the interior of the flexible package, if needed or desired.

According to one specific embodiment of the invention, a packaged unproofed dough composition includes an unproofed dough composition inside an oversized sealed film package preferably having atmospheric (approximately 1 atm) or negative internal pressure, wherein the film is folded or wrinkled against the contained unproofed dough composition to conform to the unproofed dough composition. The dough composition may be frozen or thawed, but can preferably be placed in the package when frozen.

Figures 1a and 1b (side cross-section view and top view respectively) show a dough product 2 of a wrinkled pouch containing two (more can be used) preferably frozen unproofed dough compositions (e.g., biscuits). The internal pressure of the package can preferably be no greater than 0 psig (1 atmosphere), and preferably can be but does not have to be a negative pressure (e.g., below 0 psig). According to this embodiment, one or more un-proofed frozen dough products can be vacuum packaged in an oversized flexible container (e.g., pouch) that is sized to accommodate a desired proofed volume and shape for the one or more dough compositions (i.e., the full volume of the package is larger than the volume of the unproofed frozen product). When placed under vacuum, the oversized flexible package collapses to conform to the shape of the frozen dough products and can be sealed, optionally using the vacuum to create a negative pressure inside the flexible package. Because the product is frozen, product deformation is minimized. The packaged product, preferably a chemically-leavenable product such as a chemically-leavenable biscuit, can be stored at refrigeration temperatures where thawing occurs and leavening reactions begin. As carbon dioxide gas evolves within the dough composition, the packaged dough composition will expand to fill the package form to a predetermined final pressure and shape based on the amount and type of leavening agent in the dough formulation and the fully sized package dimensions. Preferably, the dough composition can be formulated so the leavening agents preferentially expand bubbles internal to the dough composition instead of evolve carbon dioxide that would produce a gas-filled headspace. Optionally, to limit excess carbon dioxide gas accumulation inside the package, the flexible packaging material may include active carbon dioxide scavenger, e.g., a film made with, e.g., CaO or Ca(OH)₂ or another suitable carbon dioxide scavenging material. The scavenger can further eliminate the need for a relief valve by removing excess carbon dioxide released from the dough composition during proofing. The net result can be to allow proofing within a sealed package with no valve or excess accumulation of carbon dioxide gas within the package as headspace. This can result in a packaged dough product that includes a pre-proofed dough composition contained in a flexible package, with limited headspace and a relatively low internal pressure.

Figures 1a and 1b illustrate a packaged unproofed dough product 2 including unproofed dough compositions 4 inside of wrinkled or folded flexible pouch 6. The packaged dough product 2 includes a package 6 (a flexible pouch), which is shown to contain two unproofed dough compositions 4. Unproofed dough compositions 4 may be frozen or thawed, but may preferably be frozen when placed into the flexible package and sealed under vacuum, to avoid damage to the dough composition. The package 6 is illustrated as including the unproofed dough compositions 4, a negative internal pressure, wrinkles 8, substantially no headspace, and sealed edges 10. The package 6 takes the form of a sealed wrinkled pouch of a substantially gas impermeable material that is relatively flexible, but yet is relatively non-elastic and non-stretchable. The package 6 has a fully sized volume that is greater than the volume of the unproofed dough compositions 4, and that is calculated to accommodate the proofed volumes of dough compositions 4. As such, upon placing the dough compositions 4 into package 6, and removing headspace, the package 6 conforms to the size of the unproofed dough compositions 4, producing wrinkles 8. Most preferably, package 6 does not include any type of vent or pressure relief valve.

Figure 2a shows another embodiment of an unproofed packaged dough product, dough product 20 including a wrinkled chub that contains an elongated, preferably frozen, unproofed dough composition. The internal pressure of the chub can preferably be no greater than 0 psig (1 atmosphere), and may be but does not have to be a negative pressure.

Referring to figure 2a, an un-proofed frozen dough product can be vacuum packaged in an oversized flexible film container (e.g., chub) that is sized to accommodate a desired proofed volume and shape (i.e., package larger than unproofed frozen product). When headspace is removed, the oversized flexible package collapses into the shape of the frozen product and can be sealed, optionally using vacuum to create negative pressure within the flexible package. The packaged unproofed dough product, preferably containing a chemically-leavenable dough composition, can be stored at refrigeration temperatures whereupon thawing occurs and leavening reactions begin. As carbon dioxide gas evolves within the dough composition, the dough composition will expand to completely fill the package to a predetermined final pressure and shape based on the amount of leavening agents in the dough formulation and the package dimensions. Optionally, to limit excess carbon dioxide gas accumulation in the package, the flexible package may include active carbon dioxide scavenger.

Figure 2a illustrates packaged unproofed dough product 20 comprising unproofed dough composition 24 inside of wrinkled or folded flexible chub 26. Unproofed dough composition 24 may be frozen or thawed, but may preferably be frozen when placed into the flexible package 26, to avoid damage to the dough composition. The package 26 as illustrated includes the unproofed dough composition 24, a negative internal pressure, substantially no headspace, and wrinkles 28. The package 26 takes the form of a wrinkled, elongate cylinder or tube of a substantially gas impermeable material that is relatively flexible, and that may be relatively non-elastic and non-stretchable. The package 26 has a fully sized volume that is greater than the volume of unproofed dough composition 24. As such, upon placing the dough composition 24 into package 26, and removing headspace, the package 26 conforms to the size of the unproofed dough composition 24, producing wrinkles 28.

In this embodiment, ends 32 of chub 26 are gathered and substantially closed by crimped clips 30, which encircle the material of ends 32 and pinch the material together. Figure 2b shows packaged proofed dough product 20, including unwrinkled chub 26 containing proofed dough composition 24 (not shown). The packaged proofed dough product has a low internal pressure and limited headspace, and the chub 26 is substantially unstretched and unwrinkled. Most preferably the package does not contain any type of vent or a pressure relief valve. Other chub formation methods may also be used, as will be known in the dough packaging arts.

Embodiments of the invention also operate on the use of a packaged unproofed dough product comprising a packaged unproofed dough composition that is shaped to have an inefficient ratio of package volume to package surface area. The ratio of the package volume to the package surface area being inefficient means that the package has a shape that allows the volume of the package to increase without requiring the external surface area of the package to increase, i.e., the packaging material does not need to stretch. Preferably, the inefficient shape of the package that contains an unproofed dough composition will allow the unproofed packaged dough composition to proof inside of the package without requiring the package surface area to increase, without stretching of the package, and without producing a high internal pressure.

Examples of inefficient shapes include shapes that are elongated like a cylinder (e.g., tubular) but that do not have an efficient cross section; an efficient cross section is a circular cross section because (for a given volume) a circular cross section has the highest possible ratio of volume to surface area. Examples of inefficient cross sections include ovals, diamonds, trapezoids, triangles, rectangles, squares, rhombuses, hexagons, octagons, football shapes, etc., and other non-circular cross sectional shapes. Examples of inefficient package shapes, i.e., volumes, include elongated tubes that exhibit such an inefficient cross section. Exemplary cross sections are illustrated in figures 3a through 3j, which illustrate cross sections of elongate, tubular packages 36a-36j such as flexible chubs. The packages contain unproofed dough composition 38, limited headspace, and seals 40a-40j. (The seals are optional in this position and may alternatively be positioned elsewhere on an elongate tubular package, such as at an end.) Also, the cross-sections are shown with unwrinkled and unfolded packaging films, but the film may optionally be wrinkled or folded. The package cross sections of 3a-3j are, respectively, an oval, diamond, trapezoid, triangle, rectangle, square, rhombus, hexagon, octagon, and football.

For an elongated tube-type package (e.g., a chub as shown in figure 2), an inefficient cross section for a given volume and length can have a ratio of volume to surface area that is less than that of a cylinder of circular cross section. Preferably the initial ratio of surface area to volume can be sufficiently low to allow the dough to proof to 1.5 times its unproofed volume, or to double in volume from its unproofed volume, to form a cylinder.

Other inefficient three-dimensional package shapes need not be elongated, but could be more spherical, cube-shaped, or box-like, rectangular, etc.; elongated packages with inefficient cross-sections are generally preferred due to ease of manufacturing by filling a tube and shaping the tube to an inefficient form.

The flexible package containing an unproofed dough composition can change shape (because the packaging material is flexible, even if not stretchable) to increase the package volume without increasing its surface area -- i.e., without stretching. For an elongate package of non-circular cross section, e.g., a chub having a cross section from those shown in figures 3a-3j, the cross section can change upon proofing of a contained dough composition from an inefficient shape (e.g., triangle, hexagon, square, etc.) to a more cylindrical, preferably substantially cylindrical cross section. Optionally, a packaged unproofed dough composition in an inefficient package may also be at a negative pressure, or the package may be wrinkled or folded, but neither is necessary. An inefficiently shaped packaged unproofed dough composition may have an unwrinkled and unfolded exterior, and may preferably have an internal pressure that is approximately 1 atmosphere or less.

Upon proofing of the dough composition inside of the package, the shape of the package becomes more efficient in terms of the ratio of package volume to package surface area, i.e., the package volume to surface area ratio has increased. The final package can take a form or shape that at least has a more efficient cross section than the package containing the unproofed dough composition, e.g., the package that contains the proofed dough composition may be cylindrical. The internal pressure can preferably remain relatively low and the package can contain limited headspace, as described.

Thus, the invention specifically contemplates methods of preparing packaged dough products. According to one exemplary method, an unproofed dough composition is provided. The dough composition may preferably be chemically-leavenable and can preferably have a specific volume in the range from 0.5 to I .5 cc/gram. The unproofed dough composition can be placed into a flexible film package, preferably while the dough composition is frozen. Headspace in the package, if any, can be removed by one or more of shaping the package to exhibit an inefficient ratio of surface area to volume, conforming the package to the dough composition with wrinkles or folds, and using vacuum to create a negative pressure inside of the package. The package can then be sealed. Preferred flexible packages include mechanically sealed flexible chubs and heat sealed flexible pouches. The packaged unproofed dough product can then be frozen, thawed, or refrigerated as necessary or desired, and when thawed can be allowed to proof. Upon proofing, the dough composition expands within the flexible package. The expansion may cause the flexible package to change in form without substantially stretching. This may occur by the shape of the package becoming more efficient in terms of its ratio of volume to surface ratio, or by the flexible packaging expanding to eliminate folds or wrinkles.

The packaged dough product can include any type or formulation of yeast or chemically-leavenable dough composition. Many if not all formulations of yeast and chemically-leavenable dough compositions evolve an amount of leavening gas (e.g., carbon dioxide) during refrigerated or frozen storage. Preferably, the amount of leavening gas produced during proofing and the volume of the proofed dough composition can be calculated ahead of time and matched to the full unstretched and unwrinkled and unfolded volume of the package. For this reason, it can be preferred to use chemically-leavenable dough compositions with which the amount and timing of carbon dioxide production can be controlled. Alternately, yeast-leavenable dough compositions can be used, preferably with a substrate-limited yeast to control the total amount of carbon dioxide produced during proofing. Also, as stated, it can be preferred to use a dough formulation that proofs over time to produce carbon dioxide internally within the dough composition, e.g., in the form of bubble expansion, instead of or in the absence of substantial gas evolution into the package. This prevents the accumulation of carbon dioxide gas in the headspace.

Chemically-leavenable dough compositions can be prepared from ingredients generally known in the dough and bread-making arts, typically including flour, a liquid component such as oil or water, a chemical leavening system (e.g., an acidic agent and a basic agent), and optional ingredients such as shortening, salt, sweeteners, dairy products, egg products, processing aids, emulsifiers, dough conditioners, yeast as a flavorant, flavorings, and the like.

Acidic chemical leavening agents are generally known in the dough and bread-making arts. Examples include sodium aluminum phosphate (SALP), sodium acid pyrophosphate (SAPP), and monosodium phosphate; monocalcium phosphate monohydrate (MCP), anhydrous monocalcium phosphate (AMCP), dicalcium phosphate dihydrate (DCPD) as well as a variety of others. Commercially available acidic chemical leavening agents include those sold under the trade names: Levn-Lite® (SALP), Pan-O-Lite® (SALP+MCP), STABIL-9® (SALP+AMCP), PY-RAN® (AMCP), and HT® MCP (MCP). Particularly useful acidic chemical leavening agents may include SALP and SAPP and those that exhibit solubility behaviors similar to SALP and SAPP (most preferably SALP). These and other examples of acidic chemical leavening agents useful in the dough compositions are described in Assignee's copending United States Patent Application Serial No. 09/945,204, filed August 31, 2001, entitled "Chemically-leavenable Doughs and Related Methods," and in U.S. Patent No. 6,261,613.

The amount of acidic chemical leavening agent included in a dough composition can be an amount sufficient to neutralize an amount of basic chemical leavening agent during proofing, e.g., an amount that is stoichiometric to the amount of basic chemical leavening agent, with the exact amount being dependent on the particular chemical leavening system. A typical amount of acidic agent such as SALP may be in the range from about 0.25 to about 2 parts by weight per 100 parts dough composition, with ranges from about 0.25 to about 1.5 parts by weight per 100 parts dough composition being preferred.

Useful basic chemical leavening agents are generally known in the dough and baking arts, and include soda, i.e., sodium bicarbonate (NaHCO₃), potassium bicarbonate (KHCO₃), ammonium bicarbonate (NH₄HCO₃), etc. These and similar types of basic chemical leavening agent are generally soluble in an aqueous phase of a dough composition at processing or refrigerated storage temperature.

The amount of a basic chemical leavening agent to be used in a dough composition is preferably sufficient to react with the included acidic chemical leavening agent to release a desired amount of gas for leavening, thereby causing a desired degree of expansion of the dough product. The typical amount of a basic chemical leavening agent (not including the weight of barrier material) may be in the range from about 0.25 to about 2 parts by weight per 100 parts dough composition, with ranges from about 0.75 to about 1.5 parts by weight 100 parts dough composition being preferred.

Optionally, if necessary or desired to control the amount or timing of proofing that occurs in the packaged dough composition, a dough composition can include an encapsulated acidic or basic chemical leavening agent. Discussions of encapsulated leavening agents are included in Assignee's copending United States Patent Application Serial No. 09/945,204, filed August 31, 2001, entitled "Chemically-Leavenable Doughs and Related Methods," and in U.S. Patent No. 6,261,613.

Encapsulated particles containing basic chemical leavening agent are generally known, and can be prepared by methods known in the baking and encapsulation arts. An example of a method for producing enrobed particles is the use of a fluidized bed.

The packaged dough product may be sold as an unproofed or pre-proofed frozen or refrigerated packaged dough product. A consumer may be able to remove the packaged dough product from a refrigerator or freezer and bake, optionally before or after thawing if frozen.

## Claims

1. A packaged dough product comprising proofed dough composition in an unvented package comprising flexible film, the package containing less than 10% headspace and having an internal pressure of 66851 Pa to 135798 Pa (-5 psig to 5 psig).

2. The dough product of claim 1 wherein the package is a heat sealed pouch.

3. The dough product of claim 2 wherein the pouch comprises a flexible film that contains carbon dioxide scavenger.

4. The dough product of claim 2 containing less than five percent headspace.

5. The dough product of claim 1 wherein the proofed dough composition is chemically leavened.

6. The dough product of claim 1 wherein the packaged dough product does not include a cardboard canister.

7. A packaged dough product comprising unproofed dough composition in a flexible unvented package, wherein
the package comprises flexible film,
the package contains the unproofed dough composition and less than 10% headspace, and
the package is sized to allow the dough composition to increase to at least 1:5 times its original volume without substantially stretching the flexible film.

8. The dough product of claim 7 wherein the package does not include a pressure relief valve.

9. The dough product of claim 7 wherein the package is a heat sealed pouch.

10. The dough product of claim 9 wherein the pouch comprises flexible film containing carbon dioxide scavenger.

11. The dough product of claim wherein the package has an internal pressure of 101325 Pa (0 psig) or less.

12. The dough product of claim 7 comprising an unproofed frozen dough composition in a sealed flexible pouch having a negative internal pressure, the flexible pouch comprising folds or wrinkles to conform to the unproofed frozen dough composition.

13. The dough product of claim 7 having a shape of inefficient volume to surface area and containing less than 1 percent headspace.

14. The dough product of claim 13 having an elongated shape and a cross section selected from the group consisting of an oval, a diamond, a trapezoid, a triangle, a rectangle, a rhombus, a hexagon, an octagon, a football, and a square.

15. The dough product of claim 7 wherein the unproofed dough composition is chemically-leavenable.

16. A method of preparing a packaged dough product, the method comprising
providing an unproofed dough composition,
placing the unproofed dough composition into a flexible unvented package sized to fit the dough composition without substantially stretching upon proofing of the dough composition,
forming the flexible package containing the unproofed dough composition to contain less than 10 percent headspace, and
allowing the dough composition to proof inside the package.

17. The method of claim 16 wherein the dough composition is allowed to proof inside of the package to a volume that is at least 1.5 times the unproofed volume.

18. The method of claim 16 wherein the packaged dough product containing the proofed dough composition has an internal pressure below 204718 Pa (15 psig (pounds per square inch gauge)).

19. The method of claim 16 wherein the packaged unproofed dough product contains less than five percent headspace, and the packaged proofed dough product contains less than five percent headspace.

20. The method of claim 16 comprising
placing the unproofed dough composition into the flexible package while the dough composition is frozen,
using vacuum to remove headspace and reduce pressure inside the package, and
sealing the package to have a negative internal pressure.

21. The method of claim 20 comprising thawing and proofing the frozen dough composition during refrigerated storage.

22. The method of claim 16 comprising
providing a frozen unproofed chemically-leavenable dough composition,
placing the frozen unproofed dough composition into a flexible package,
using vacuum to remove headspace from the package and produce a negative internal pressure in the package, and
heat sealing the package.

## Patentansprüche

1. Verpacktes Teigprodukt, welches eine gegangene Teigzusammensetzung in einer unbelüfteten Verpackung umfasst, die flexible Folie umfasst, wobei die Verpackung weniger als 10 % Leerraum enthält und einen Innendruck von 66851 Pa bis 135798 Pa (-5 psig bis 5 psig) aufweist.

2. Teigprodukt nach Anspruch 1, wobei die Verpackung ein heißversiegelter Beutel ist.

3. Teigprodukt nach Anspruch 2, wobei der Beutel eine flexible Folie umfasst, welche Kohlendioxidfänger enthält.

4. Teigprodukt nach Anspruch 2, welches weniger als fünf Prozent Leerraum enthält.

5. Teigprodukt nach Anspruch 1, wobei die gegangene Teigzusammensetzung chemisch gehen gelassen wurde.

6. Teigprodukt nach Anspruch 1, wobei das verpackte Teigprodukt keinen Pappbehälter aufweist.

7. Verpacktes Teigprodukt, das eine ungegangene Teigzusammensetzung in einer flexiblen unbelüfteten Verpackung umfasst, wobei
die Verpackung flexible Folie umfasst,
die Verpackung die ungegangene Teigzusammensetzung und weniger als 10 % Leerraum enthält, und
die Verpackung eine solche Größe hat, dass sie der Teigzusammensetzung ermöglicht, ihr ursprüngliches Volumen auf mindestens das 1,5-fache zu vergrößern, ohne die flexible Folie wesentlich zu dehnen.

8. Teigprodukt nach Anspruch 7, wobei die Verpackung kein Überdruckventil aufweist.

9. Teigprodukt nach Anspruch 7, wobei die Verpackung ein heißversiegelter Beutel ist.

10. Teigprodukt nach Anspruch 9, wobei der Beutel eine flexible Folie umfasst, welche Kohlendioxidfänger enthält.

11. Teigprodukt nach Anspruch 7, wobei die Verpackung einen Innendruck von 101325 Pa (0 psig) oder weniger aufweist.

12. Teigprodukt nach Anspruch 7, das eine ungegangene gefrorene Teigzusammensetzung in einem versiegelten flexiblen Beutel mit einem negativen Innendruck umfasst, wobei der flexible Beutel Falten oder Knitter aufweist, um sich an die Form der ungegangenen gefrorenen Teigzusammensetzung anzupassen.

13. Teigprodukt nach Anspruch 7, das eine Form mit einem ineffizienten Volumen zu Oberfläche aufweist und weniger als 1 Prozent Leerraum enthält.

14. Teigprodukt nach Anspruch 13, das eine lang gestreckte Form aufweist und einen Querschnitt, der aus der Gruppe gewählt ist, die aus einem Oval, einer Raute, einem Trapezoid, einem Dreieck, einem Rechteck, einem Rhombus, einem Sechseck, einem Achteck, einem Fußball und einem Quadrat besteht.

15. Teigprodukt nach Anspruch 7, wobei die ungegangene Teigzusammensetzung chemisch gehen gelassen werden kann.

16. Verfahren zum Herstellen eines verpackten Teigproduktes, wobei das Verfahren umfasst:
Bereitstellen einer ungegangenen Teigzusammensetzung,
Einlegen der ungegangenen Teigzusammensetzung in eine flexible unbelüftete Verpackung, die eine solche Größe hat, dass sie zu der Teigzusammensetzung passt, ohne sich beim Gehenlassen der Teigzusammensetzung wesentlich zu dehnen,
Formen der flexiblen Verpackung, welche die ungegangene Teigzusammensetzung enthält, derart, dass sie weniger als 10 Prozent Leerraum enthält, und
Gehenlassen der Teigzusammensetzung innerhalb der Verpackung.

17. Verfahren nach Anspruch 16, wobei die Teigzusammensetzung innerhalb der Verpackung bis zu einem Volumen gehen gelassen wird, welches mindestens das 1,5-fache des ungegangenen Volumens beträgt.

18. Verfahren nach Anspruch 16, wobei das verpackte Teigprodukt, das die gegangene Teigzusammensetzung enthält, einen Innendruck von weniger als 204718 Pa (15 psig (pounds per square inch gauge)) aufweist.

19. Verfahren nach Anspruch 16, wobei das verpackte ungegangene Teigprodukt weniger als fünf Prozent Leerraum enthält und das verpackte gegangene Teigprodukt weniger als fünf Prozent Leerraum enthält.

20. Verfahren nach Anspruch 16, welches umfasst:
Einlegen der ungegangenen Teigzusammensetzung in die flexible Verpackung, während die Teigzusammensetzung gefroren ist,
Verwenden von Vakuum, um Leerraum zu beseitigen und den Druck innerhalb der Verpackung zu verringern, und
Versiegeln der Verpackung, um einen negativen Innendruck zu haben.

21. Verfahren nach Anspruch 20, welches das Auftauen und Gehenlassen der gefrorenen Teigzusammensetzung während der gekühlten Lagerung umfasst.

22. Verfahren nach Anspruch 16, welches umfasst:
Bereitstellen einer gefrorenen ungegangenen, Teigzusammensetzung, die chemisch gehen gelassen werden kann,
Einlegen der gefrorenen ungegangenen Teigzusammensetzung in eine flexible Verpackung,
Verwenden von Vakuum, um Leerraum aus der Verpackung zu beseitigen und einen negativen Innendruck in der Verpackung zu erzeugen, und
Heißversiegeln der Verpackung.

## Revendications

1. Produit à pâte emballé comprenant une composition de pâte fermentée dans un emballage sous vide comprenant un film flexible, l'emballage contenant moins de 10 % d'espace libre et présentant une pression interne comprise dans la gamme de 66851 Pa à 135798 Pa (-5 psig à 5 psig).

2. Produit à pâte selon la revendication 1, dans lequel l'emballage est un sachet scellé à chaud.

3. Produit à pâte selon la revendication 2, dans lequel le sachet comprend un film flexible contenant un fixateur de dioxyde de carbone.

4. Produit à pâte selon la revendication 2 contenant moins de cinq pour cent d'espace libre.

5. Produit à pâte selon la revendication 1, dans lequel la composition à pâte fermentée est levée chimiquement.

6. Produit à pâte selon la revendication 1, dans lequel le produit à pâte emballé ne comprend pas de boîte en carton.

7. Produit à pâte emballé comprenant une composition de pâte non fermentée dans un emballage flexible sous vide, dans lequel:
l'emballage comprend un film flexible;
l'emballage contient la composition de pâte non fermentée et moins de 10 % d'espace libre; et
l'emballage est dimensionné de manière à permettre à la composition de pâte de gonfler jusqu'à atteindre une taille correspondant au moins à 1,5 fois son volume original sans étirer sensiblement le film flexible.

8. Produit à pâte selon la revendication 7, dans lequel l'emballage n'est pas équipé d'un clapet de détente de pression.

9. Produit à pâte selon la revendication 7, dans lequel l'emballage est un sachet scellé à chaud.

10. Produit à pâte selon la revendication 9, dans lequel le sachet comprend un film flexible contenant un fixateur de dioxyde de carbone.

11. Produit à pâte selon la revendication 7, dans lequel l'emballage présente une pression interne de 101325 Pa (0 psig) ou moins.

12. Produit à pâte selon la revendication 7, comprenant une composition de pâte congelée non fermentée dans un sachet flexible scellé présentant une pression interne négative, le sachet flexible comprenant des plis ou des rides pour épouser la composition de pâte congelée non fermentée.

13. Produit à pâte selon la revendication 7, présentant une forme ayant un rapport entre volume et surface quelconque et contenant moins de 1 pour cent d'espace libre.

14. Produit à pâte selon la revendication 13, présentant une forme allongée et une section transversale sélectionnée dans le groupe comprenant la forme d'un ovale, d'un diamant, d'un trapèze, d'un triangle, d'un rectangle, d'un losange, d'un hexagone, d'un octogone, d'un ballon de football américain et d'un carré.

15. Produit à pâte selon la revendication 7, dans lequel la composition de pâte non fermentée peut être levée chimiquement.

16. Procédé de préparation d'un produit à pâte emballé, le procédé comprenant:
la fourniture d'une composition de pâte non fermentée;
le placement de la composition de pâte non fermentée dans un emballage flexible sous vide dimensionné pour s'adapter à la composition de pâte sans s'étirer sensiblement au moment de la fermentation de la composition de pâte;
la formation de l'emballage flexible contenant la composition de pâte non fermentée de telle sorte qu'il contienne moins de 10 pour cent d'espace libre; et
la fermentation de la composition de pâte à l'intérieur de l'emballage.

17. Procédé selon la revendication 16, dans lequel la composition de pâte peut fermenter à l'intérieur de l'emballage jusqu'à un volume correspondant au moins à 1,5 fois son volume non fermenté.

18. Procédé selon la revendication 16, dans lequel le produit à pâte emballé contenant la composition de pâte fermentée présente une pression interne inférieure à 204718 Pa (15 psig (livres par pouce carré)).

19. Procédé selon la revendication 16, dans lequel le produit à pâte non fermenté emballé contient moins de cinq pour cent d'espace libre, et le produit à pâte fermenté emballé contient moins de cinq pour cent d'espace libre.

20. Procédé selon la revendication 16, comprenant:
le placement de la composition de pâte non fermentée dans l'emballage flexible alors que la composition de pâte est congelée;
l'application d'un vide pour vider l'espace libre et réduire la pression à l'intérieur de l'emballage; et
le scellage de l'emballage pour créer une pression interne négative.

21. Procédé selon la revendication 20, comprenant la décongélation et la fermentation de la composition de pâte congelée pendant l'entreposage frigorifique.

22. Procédé selon la revendication 16, comprenant:
la fourniture d'une composition de pâte congelée non fermentée à lever chimiquement;
le placement de la composition de pâte congelée non-fermentée dans un emballage flexible;
l'application d'un vide pour vider l'espace libre de l'emballage et créer une pression interne négative dans l'emballage; et
le scellage à chaud de l'emballage.
